(19) Europäisches Patentamt / European Patent Office / Office européen des brevets

(11) **EP 4 357 093 A1**

(12) **EUROPEAN PATENT APPLICATION**

(43) Date of publication:
**24.04.2024 Bulletin 2024/17**

(21) Application number: **22306590.5**

(22) Date of filing: **20.10.2022**

(51) International Patent Classification (IPC):
**B28C 5/38** *(2006.01)*     **B28B 19/00** *(2006.01)*
**B28C 7/16** *(2006.01)*     **C04B 38/10** *(2006.01)*

(52) Cooperative Patent Classification (CPC):
**B28B 19/0092; B28C 5/06; B28C 7/0413;**
**B28C 7/16; C04B 38/106**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SAINT-GOBAIN PLACO**
**92400 Courbevoie (FR)**

(72) Inventors:
- **SAINGIER, Guillaume**
  **93300 Aubervilliers (FR)**

- **RANZANI DA COSTA, Andrea**
  **92400 Courbevoie (FR)**
- **JAFFEL, Hamouda**
  **92400 Courbevoie (FR)**
- **HESSOVA, Martina**
  **180 00 Praha 8 (CZ)**
- **KAMLER, Radomir**
  **180 00 Praha 8 (CZ)**

(74) Representative: **Murgitroyd & Company**
**165-169 Scotland Street**
**Glasgow G5 8PL (GB)**

(54) **APPARATUS AND METHOD FOR MANUFACTURING CEMENTITIOUS SLURRY COMPRISING FOAM, AND CHANNEL FOR SUCH APPARATUS**

(57)     There is provided an apparatus (100) for manufacturing a cementitious slurry comprising foam, the apparatus (100) comprising; a mixing chamber (101) for mixing a cementitious material and water to form a cementitious slurry, a channel (103) fluidly connected to the mixing chamber (100) at a first end, the channel (103) for receiving the cementitious slurry from the mixing chamber (101), the channel (103) extending from the first end and terminating at a second end; the channel (103) comprising a foam inlet (106) for introducing foam into the channel (103); wherein the portion of the channel (103) between the foam inlet (106) and the second end has a length from 400 mm to 1200 mm inclusive. A cementitious slurry channel and a method of manufacturing a cementitious slurry are also provided.

Fig. 1

EP 4 357 093 A1

**Description**

**FIELD OF THE INVENTION**

The present invention relates to apparatus for manufacturing a cementitious slurry comprising foam. The present invention also relates to a method of manufacturing a cementitious slurry comprising foam using the apparatus.

**BACKGROUND TO THE INVENTION**

Gypsum occurs naturally as a raw material in the form of calcium sulphate dihydrate ($CaSO_4$ $2(H_2O)$). Gypsum containing products, such as plasterboard, are prepared by forming a mixture of calcined or dehydrated gypsum, namely calcium sulphate hemihydrate ($CaSO_4$ $0.5(H_2O)$), with water, to form a settable slurry that is then cast into a pre-determined shape. The calcium sulphate hemihydrate reacts with the water and becomes re-hydrated to the dihydrate crystal, which is then cured or dried to the solid state.

Due their versatility, desirable mechanical properties and the possibility of achieving a high level of finish, gypsum products are commonly found throughout buildings. As such, there is a desire to produce lightweight gypsum products. A reduction in the quantity of gypsum used substantially reduces the resource demand of the manufacturing process, therefore reducing material costs. As such, the weight of these gypsum products is of great importance.

To provide a lightweight gypsum product, foam can be added to the settable slurry. One method of combining the foam with the slurry is to mix the foam and slurry within a mixing chamber. However, the mixing process can cause the shearing and breaking of bubbles, leading to a destabilisation of the foam as the bubbles disperse. Such dispersion leads to high foam losses, creating an inefficient process that can limit the extent of the density reduction achieved using this method.

**SUMMARY OF THE INVENTION**

According to a first aspect of the present invention there is provided an apparatus for manufacturing a cementitious slurry comprising foam, the apparatus comprising; a mixing chamber for mixing a cementitious material and water to form a cementitious slurry, a channel fluidly connected to the mixing chamber at a first end, the channel for receiving the cementitious slurry from the mixing chamber, the channel extending from the first end and terminating at a second end; the channel comprising a foam inlet for introducing foam into the channel; wherein the portion of the channel between the foam inlet and the second end has a length from 400 mm to 1200 mm inclusive.

The present invention provides an apparatus and method for efficiently and consistently combining foam with a cementitious slurry, such as a stucco or gypsum slurry. In the prior art, the mixing means inside the mixing chamber may impose very high shear rates within the slurry. These high shear rates can break up the bubbles and destabilise any foam in the mixing chamber. Therefore, introducing foam into the cementitious slurry in the mixing chamber can lead to high levels of foam loss. The present invention addresses this problem of the prior art, as the length of the channel between the foam inlet and the second end ensures the foam is evenly mixed throughout the cementitious slurry with low levels of foam loss.

Additionally, the length of the channel prevents an unnecessary increase in the backpressure experienced by fluids in the apparatus which occurs when the length of the channel is longer than described herein. Further, a reduction in the length of the channel allows easier installation of the apparatus, with a more compact solution provided.

Preferably, the portion of the channel between the foam inlet and the second end has a length from 400 mm to 600 mm inclusive.

Preferably, the channel comprises a mixing cross section, the mixing cross section comprising a first dimension and a second dimension, the first dimension perpendicular to the second dimension, the first dimension being longer than the second dimension, wherein the foam inlet is configured to introduce foam into the channel in a direction generally parallel to the second dimension.

Such a feature may be preferable as the relative dimensions of the channel and the location of the foam input ensure the foam is evenly mixed throughout the cementitious slurry with low levels of foam loss.

More preferably, the first dimension of the mixing cross section is more than 1.1 times than the second dimension of the mixing cross section. Still more preferably, the first dimension of the mixing cross section is more than 1.2 times the second dimension of the mixing cross section. Yet more preferably, the first dimension of the mixing cross section is more than 1.4 times the second dimension of the mixing cross section. Most preferably, the first dimension of the mixing cross section is more than 1.5 times the second dimension of the mixing cross section.

Preferably, the first dimension of the mixing cross section is at most equal to 12 times the second dimension of the mixing cross section. More preferably, the first dimension of the mixing cross section is at most equal to 10 times the second dimension of the mixing cross section. Still more preferably, the first dimension of the mixing cross section is at most equal to 8 times the second dimension of the mixing cross section. Most preferably, the first dimension of the mixing cross section is at most equal to 6 times the second dimension of the mixing cross section

Preferably, the foam inlet is configured to introduce foam into the mixing cross section. Alternatively, the foam inlet is configured to introduce foam into the channel upstream of the mixing cross section.

Preferably, the mixing cross section extends at least 50% of the distance between the foam inlet and the second end. More preferably, the mixing cross section extends at least 75% of the distance between the foam inlet and the second end. Still more preferably, the mixing cross section extends at least 90% of the distance between the foam inlet and the second end. Most preferably, the mixing cross section extends between the foam inlet and said second end.

Preferably, the mixing cross section extends at least 50% of the distance between the first end and the second end. More preferably, the mixing cross section extends at least 75% of the distance between the first end and the second end. Still more preferably, the mixing cross section extends at least 90% of the distance between the first end and the second end. Most preferably, the mixing cross section extends between the first end and said second end.

Preferably, the foam inlet is located closer to the first end of the channel than the second end of the channel. More preferably, the foam inlet is positioned such that the distance between the first end of the channel and the foam inlet is less than 25% of the distance between the first end of the channel and the second end of the channel.

Preferably, the mixing chamber comprises a mixing member, wherein the mixing member is configured to rotate. Preferably, the first end of the channel is located such that, in use, the cementitious slurry exits the mixing chamber in a direction tangential to the mixing member.

Preferably, the second end of the channel is connected to a distribution hose. Preferably, the second end of the channel is connected to a secondary chamber. Preferably, the foam inlet is positioned such that foam is transversely injected within the slurry stream in the channel. Preferably, the channel is substantially straight. Alternatively, the channel comprises a curve, kink or bend.

Preferably, the cementitious material comprises at least one of calcium sulphate hemihydrate and calcium sulphate dihydrate. More preferably, the cementitious material consists essentially of calcium sulphate hemihydrate.

Preferably, the foam inlet has a substantially circular cross-section. Alternatively, the foam inlet has a substantially square cross-section.

According to a second aspect of the present invention, there is provided a cementitious slurry channel configured to form a fluid connection with a cementitious slurry mixer, the cementitious slurry channel comprising a foam inlet, a first end and a second end, wherein the portion of the channel between the foam inlet and the second end has a length from 400 mm to 1200 mm inclusive.

In this way, a cementitious slurry channel that provides the hereinbefore described advantages is provided.

Preferably, the portion of the channel between the foam inlet and the second end has a length from 400 mm to 600 mm inclusive.

According to a third aspect of the present invention, there is provided a method of manufacturing a cementitious slurry comprising foam, the method comprising; providing the apparatus as hereinbefore described; introducing a cementitious material and water into the mixing chamber to form a cementitious slurry; and introducing foam into the cementitious slurry via the foam inlet.

Preferably, the foam is introduced to the cementitious slurry at a velocity between three and five times inclusive the velocity of the cementitious slurry. More preferably, the foam is introduced to the cementitious slurry at a velocity between three and a half and four times inclusive the velocity of the cementitious slurry. Here, the velocities considered are the mean flow rate of foam and the cementitious slurry through the apparatus, and not the local velocities.

## DETAILED DESCRIPTION

Embodiments of the present invention will now be described by way of example only and with reference to the accompanying drawings, in which:

Figure 1 depicts an apparatus in accordance with the first embodiment of the present invention;

Figure 2 depicts a schematic view of a method in accordance with a third aspect of the present invention;

Figures 3 and 4 depict density deviation-length graphs to indicate the mixing homogeneity of the foam and cementitious slurry mixture for various channel lengths; and

Figure 5 depicts a pressure-length graph to indicate the backpressure in the channel.

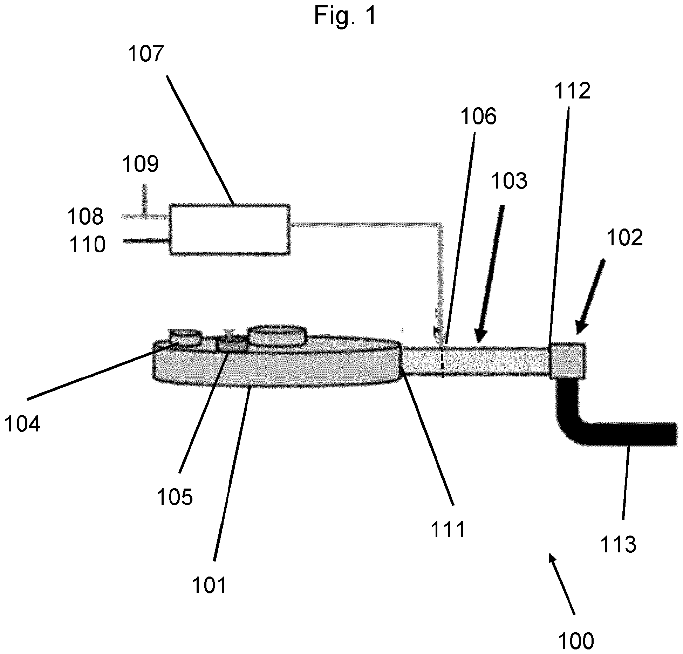

Figure 1 illustrates an apparatus 100 for manufacturing a cementitious slurry comprising foam. The apparatus 100 comprises a mixing chamber 101 and a secondary chamber 102 for mixing cementitious slurry from the mixing chamber 101 with a foam. The mixing chamber 101 is connected to the secondary chamber 102 by a channel 103. The secondary chamber 102 comprises a canister.

The mixing chamber 101 comprises a cementitious material inlet 104 for introducing at least one cementitious material, such as calcium sulphate hemihydrate or stucco, into the mixing chamber 101 and a first water inlet 105 for introducing water into the mixing chamber 101. In this way, a cementitious material and water can be introduced into the mixing chamber 101. The mixing chamber comprises a mixing member, the mixing member comprising a plurality of blades or teeth. In use, the mixing member rotates within the mixing chamber 101, combining the water and the cementitious material to form a cementitious slurry. After its formation, the cementitious slurry can exit the mixing chamber 101 and enter the channel 103 via the mixing chamber outlet 111. The mixing chamber outlet 111 ensures the channel 103 is in fluid communication with the mixing chamber 101, such that the cementitious slurry can pass freely from the mixing chamber 101 into the channel 103. The mixing chamber outlet 111 represents the first end of the channel 103.

The channel 103 comprises a foam inlet 106 for introducing foam into the channel 103. The foam intlet 106 is fluidly connected to the channel 103, ensuring that, in use, foam can freely enter the channel 103 through the foam inlet 106. In use, foam is injected into the channel 103 via the foam inlet 106. In this way, downsteam of the foam inlet 106, the channel comprises an increasingly uniform mixture of cementitious slurry and foam.

In the illustrated embodiment, the foam is a preformed aqueous foam generated in a foam generator 107. The foam generator comprises a second water inlet 108 for introducing water into the foam generator 107, a soap inlet 109 for introducing soap into the foam generator 107 and an air inlet 110 for introducing air into the foam generator 107. The paths of the second water inlet 108 and soap inlet 109 join and combine before entering the foam generator 107. Air, water and soap are introduced into the foam generator 107 to generate a foam.

The channel 103 extends from the mixing chamber outlet 111 and is substantially straight. The channel 103 terminates at a second end, this second end being a secondary chamber inlet 112. As such, the cementitious slurry exiting the mixing chamber 101 via the mixing chamber outlet 111 and the foam entering the channel via the foam inlet 106 are combined and mixed as they flow along the channel 103. The mixed foam and cementitious slurry then exits the channel 103 and enters a secondary chamber 102 via the secondary chamber inlet 112. In the secondary chamber 102, the cementitious slurry and the foam are mixed further. When foam is injected directly into the mixing chamber 101, the stability of the bubbles is reduced due to the movement of the mixing arm and the shear forces present in the mixing chamber 101. Therefore, to reduce bubble impairment, the foam inlet 106 is located in the channel 103 downstream of the mixing chamber outlet 111.

The foam inlet 106 is positioned such that the distance between the first end of the channel 103, namely the end located adjacent the mixing chamber outlet 111, and the foam inlet 106 is less than 25% of the distance between the first end of the channel 103 and the second end of the channel 103, namely the end of the channel adjacent the secondary chamber inlet 112.

The secondary chamber 102 is connected to a distribution hose 113. The cementitious slurry and foam stream exiting the channel 103 and entering the secondary chamber 102 via the secondary chamber inlet 112 is further mixed as it traverses through the secondary chamber 102, before exiting the secondary chamber 102 via distribution hose 113. As such, there is a continuous fluid connection between the mixing chamber 101 and the distribution hose 113, this fluid connection continuing through the mixing chamber outlet 111, the channel 103, the secondary chamber inlet 112 and the secondary chamber 102. In this embodiment, the distribution hose 113 divides at a point along its length such that it comprises a pair of elongate portions each comprising a distribution hose exit. Whilst in the present embodiment the distribution hose 113 is connected to the secondary chamber 102, in alternative embodiments it is envisaged that the distribution hose 113 may be connected directly to the channel 103, such that the secondary chamber 102 is omitted from the apparatus.

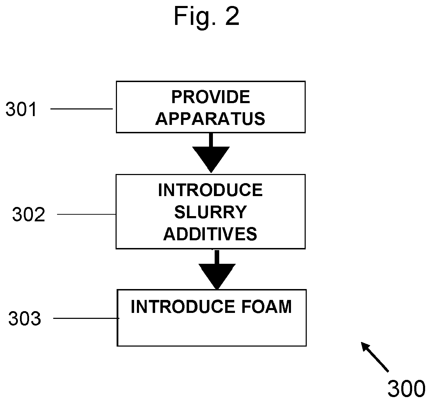

The present invention further relates to a method 300 of manufacturing a cementitious slurry comprising foam, as illustrated in Figure 2. The method comprises a PROVIDE APPARATUS step 301, wherein an apparatus as hereinbefore described is provided. There follows an INTRODUCE SLURRY ADDITIVES step 302, wherein cementitious material and water are introduced into the slurry chamber via their respective inlets. Next, a foam can be introduced into the cementitious slurry in the channel via the foam inlet in an INTRODUCE FOAM step 303.

Computer modelling was undertaken to demonstrate the advantages of the hereinbefore described apparatus and method.

**DENSITY DEVIATION**

To assess the homogeneity of the slurry-foam mixture, and therefore the quality of mixing of the cementitious slurry and the foam, the computed variations in the density of the slurry-foam mixture at various positions within the channel can be considered. In these computations, a higher degree in density variation measured at a given point indicates a lack of homogeneity in the slurry-foam mixture. As such, a low degree of density variation is desirable.

To calculate the homogeneity of the cementitious slurry and the slurry-foam mixture, the flow of the cementitious slurry, foam and slurry-foam mixture was modelled. Transverse sections through the channel were taken, and the mean density and the standard deviation of the density within each transverse section were calculated. The mean density is taken across a volume or section area, and is not the mean density over time. The density deviation was subsequently calculated, the density deviation defined as:

$$\text{Density deviation [\%]} = 100 \times \frac{\text{Density Standard Deviation}}{\text{Mean Density}}$$

Perfect homogeneity of the foam within the slurry flow has a density deviation of zero.

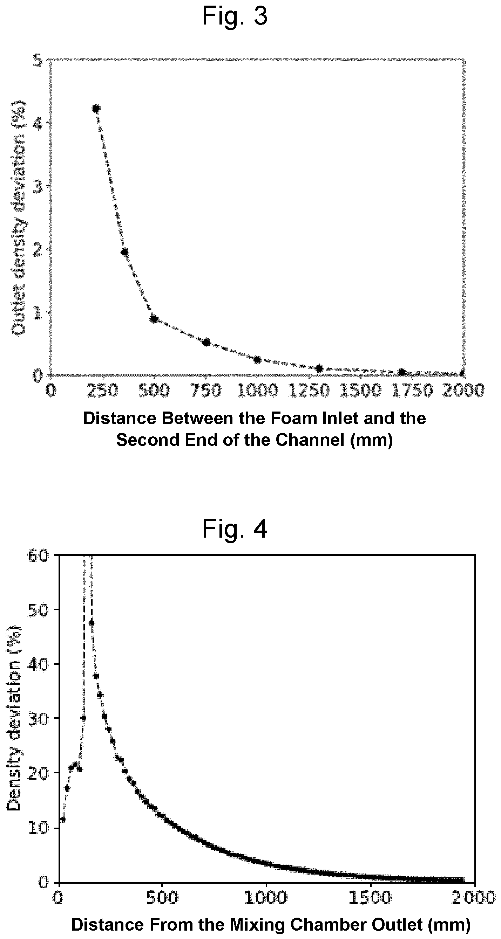

Figure 3 illustrates the calculated density deviation at the exit of the distribution hose. The distribution hose length was modelled as 900 mm. To obtain the data for Figure 3, the foam inlet was modelled in the channel at a fixed distance of 136 mm from the mixing chamber. Additionally, the channel was modelled as having a square cross section with dimensions of 39 mm and 39 mm.

Here, the numerical modelling of slurry-foam blending was undertaken using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer.

As can be seen in Figure 3, where the distance between the foam inlet and the second end of the channel is short, below 400 mm, then the density deviation measured at the outlet is high. As such, where this distance is below 400 mm, the slurry-foam mixture exiting the apparatus will be highly variable, resulting in inconsistencies in the properties of any subsequently manufactured products.

Figure 3 further illustrates that the longer the distance between the foam inlet and the second end of the channel the lower the density variation seen at the outlet. As such, a longer distance between the foam inlet and the second end of the channel reduces the variability of the density of the slurry-foam mixture, concomitantly reducing variations in any final products produced from the slurry-foam mixture.

Figure 4 models a channel with a total length of 2000 mm, a square cross section and dimensions of 39 mm and 39 mm. Here, the foam inlet was modelled introducing the foam to the cementitious slurry 136 mm from the first end of the channel. The numerical modelling of slurry-foam blending was undertaken using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer.

As can be seen from Figure 4, where the foam is introduced, there is a significant increase in the calculated density deviation, before the density deviation exhibits exponential type decay along the length of the channel. As such, Figure 4 confirms that a longer length between the foam inlet and the second end of the channel reduces any observed density variations within the slurry-foam mixture.

## BACKPRESSURE WITHIN THE CHANNEL

Backpressure is the force or resistance opposing a flow through a system. In the present invention, both the cementitious slurry and the foam experience a backpressure opposing their flow through the channel to its second end.

As such, the length between the foam inlet and the second end of the channel cannot be optimised by considering the density deviation of the slurry-foam mixture alone. In any such optimisation, it is also necessary to consider the backpressure on both the foam and the cementitious slurry as the distance between the foam inlet and the second end of the channel increases.

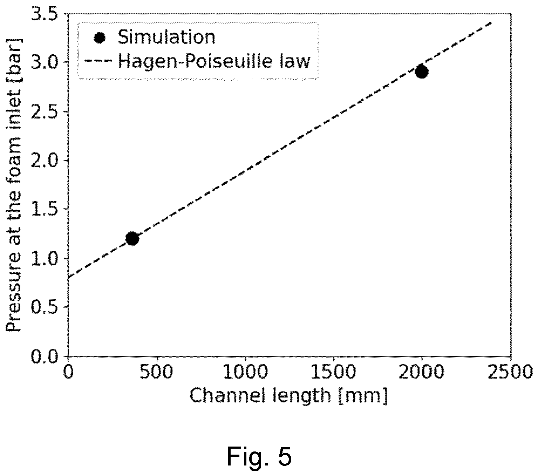

Figure 5 illustrates the change in backpressure as the length between the foam inlet and the second end of the channel is increased. It can be seen that as the distance between the foam inlet and the second end of the channel increases, the backpressure within the channel increases. It can be mathematically determined that back pressure imposed by the flow of the slurry stream increases linearly with the channel length using the equation known in the literature as Hagen-Poiseuille equation:

$$\Delta P = \frac{8\,\pi\,\mu\,L\,Q}{A^2}$$

Where $\Delta P$ is the backpressure, $\mu$ the effective viscosity of the sheared gypsum slurry (equal to 1 Pa.s in these conditions from rheological measurements), L the length of the pipe, Q the throughput and A the cross section area of the pipe. In these experiments, the throughput used was 10 Ls$^{-1}$. This calculated back pressure is added to the back pressure already generated by the distribution hose and the canister, equal to 0.8 bar. Additionally, a backpressure results from the presence of the foam generator, this backpressure being in the range of 1 to 2 kPa. To ensure stability of the industrial process, it is generally understood that this backpressure should not exceed 2 kPa.

## CROSS-SECTIONAL PROFILE

The cross-sectional profile of the channel also influences the mixing characteristics of the slurry. To assess this, the density deviation of a number of cross-sectional profiles, each having the same channel length, have been numerically investigated. The cross-sectional profile variations are shown in Examples 1 to 4. Examples 1 and 4 are rectangular cross-sections, Example 2 is a square cross-section and Example 3 is a circular cross-section. The numerical modelling of slurry-foam blending was undertaken using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer.

Each one of Examples 1 to 4 has a similar cross-sectional area, such that the only substantial variation in each channel is the shape of the channel cross section. The dimensions of each of Examples 1 to 4, and their cross sectional areas, are detailed in Table 1.

**Table 1**

| Example | Height (mm) | Width (mm) | Diameter (mm) | Area (mm$^2$) |
|---|---|---|---|---|
| Example 1 | 30 | 50 | - | 1500 |
| Example 2 | 39 | 39 | - | 1521 |
| Example 3 | - | - | 44 | 1521 |
| Example 4 | 50 | 30 | - | 1500 |

Table 2 details the Height to Width ratio of each Example as well as the density deviation at the distribution hose exit of the distribution hose. The distribution hose length was 900 mm. The channel length was 360mm, and the foam was modelled as being injected in a direction substantially parallel to the width of the channel, and substantially perpendicular to the height of the channel.

**Table 2**

| Example | H:W Ratio | Density Deviation (%) |
|---|---|---|
| Example 1 | 1:1.7 | 2.59 |
| Example 2 | 1:1 | 1.95 |
| Example 3 | 1:1 | 1.11 |
| Example 4 | 1.7:1 | 0.85 |

In each of Examples 1 to 4, the model predicted a similar degree of foam penetration. As such, in each case the ratio between the velocity of the foam and the velocity of the cementitious slurry was calculated to be similar. However, the differences in cross sectional shape between Examples 1 to 4 did produce a difference in density deviation as shown in Table 2.

Table 2 shows that the foam is better dispersed in the slurry stream when the height of the channel between the foam inlet and the second end is greater than the width of the channel between the foam inlet and the second end, as seen in Example 4. In Example 4, the density deviation is the lowest, thereby indicating the best homogeneity in the slurry-foam mixture. As such, the modelling illustrates improved characteristics in the slurry-foam mixture when the first dimension of the mixing cross section is greater than the second dimension of the mixing cross section.

Whilst the examples show that increasing the height of the channel relative to the width of the channel will result in reduced density deviations, increasing the height of the channel beyond certain limits may make its practical inclusion in a plant more challenging, as the channel dimensions become incompatible with other aspects of the apparatus.

Namely, the height of the mixing chamber imposes a maximum functional height on the mixing chamber outlet and, in turn, a maximum height is imposed on the channel. Further, the diameter of the foam inlet imposes a minimum width on the channel. In turn, a minimum channel height is imposed to maintain the desired height to width ratio of the channel.

For the simulations described herein, the foam inlet diameter is 15 mm. As such, considering the maximum height of the mixing chamber, the maximum channel height is 100 mm, maintaining a height:width ratio of 6.7:1.

The advantage of the minimum channel width limitation imposed by the foam inlet diameter is that the maximum channel height to width ratio can be calculated independently of the line speed or size of the plant. The ratio of velocity of foam introduced into the slurry against the velocity of the cementitious slurry is preferably between 3 and 5. The maximum channel height to width ratio can be determined using the following calculations.

$$\frac{V_{foam}}{V_{slurry}} = \alpha$$

Firstly, the foam to cementitious slurry velocity ratio is $\frac{V_{foam}}{V_{slurry}} = \alpha$ wherein $\alpha$ is preferably between 3 and 5.

The velocity ratio can be determined by considering the volumetric flow rate (Q) of the cementitious slurry and the foam and the cross sectional area (A) of the foam inlet and the cross sectional area of the channel, for the foam cross sectional area ($A_{foam}$) and the cementitious slurry cross sectional area ($A_{slurry}$), respectively.

$$\alpha = \frac{Q_{foam}}{Q_{slurry}} \times \frac{A_{slurry}}{A_{foam}}$$

It is calculated that $\frac{Q_{foam}}{Q_{slurry}}$ is generally between 1/3 and 1/2. Therefore, the following calculation can be used to calculate the maximum channel height to width ratio for a foam inlet:

$$\frac{H_{channel}}{W_{channel}} = \frac{Q_{slurry}}{Q_{foam}} \times \frac{\pi}{4} \times \alpha$$

The maximum channel height to width ratio imposed on an apparatus a foam to cementitious slurry velocityratio of 5 is 12:1. Namely, a low quantity of foam having a high inlet foam velocity is introduced into the cementitious slurry. A further calculation must be undertaken to confirm that the maximum channel height to width ratio does not exceed the channel height restriction imposed by the maximum height of the mixing chamber.

**Claims**

1. Apparatus for manufacturing a cementitious slurry comprising foam, said apparatus comprising;

   a mixing chamber for mixing a cementitious material and water to form a cementitious slurry,
   a channel fluidly connected to said mixing chamber at a first end, said channel for receiving said cementitious slurry from said mixing chamber, said channel extending from said first end and terminating at a second end;
   said channel comprising a foam inlet for introducing foam into said channel; wherein the portion of said channel between said foam inlet and said second end has a length from 400 mm to1200 mm inclusive.

2. The apparatus of claim 1, wherein said channel comprises a mixing cross section, the mixing cross section comprising a first dimension and a second dimension;

   said first dimension perpendicular to said second dimension;
   said first dimension being longer than said second dimension;
   wherein said foam inlet is configured to introduce foam into said channel in a direction generally parallel to said second dimension.

3. The apparatus of claim 2, wherein said foam inlet is configured to introduce foam into said mixing cross section.

4. The apparatus of claim 2 or claim 3, wherein said mixing cross section extends between said foam inlet and said second end.

5. The apparatus of any one of claims 2 to 4, wherein said mixing cross section extends from said first end to said second end.

6. The apparatus of any one preceding claim, wherein said foam inlet is located closer to said first end of said channel than said second end of said channel.

7. The apparatus of claim 6, wherein said foam inlet is positioned such that the distance between said first end of said channel and said foam inlet is less than 25% of the distance between said first end of said channel and said second end of said channel.

8. The apparatus of any one preceding claim, wherein said mixing chamber comprises a mixing member, wherein said mixing member is configured to rotate.

9. The apparatus of claim 8, wherein said first end of said channel is located such that, in use, said cementitious slurry exits said mixing chamber in a direction tangential to said mixing member.

10. The apparatus of any one preceding claim, wherein said second end of said channel is connected to a distribution hose.

11. The apparatus of any one preceding claim, wherein said second end of said channel is connected to a secondary chamber.

12. The apparatus of any one preceding claim, wherein said channel comprises a curve, kink or bend.

13. A cementitious slurry channel configured to form a fluid connection with a cementitious slurry mixer,

said cementitious slurry channel comprising a foam inlet, a first end and a second end,
wherein the portion of said channel between said foam inlet and said second end has a length from 400 mm to 1200 mm inclusive.

14. A method of manufacturing a cementitious slurry comprising foam, said method comprising;

providing the apparatus of any one preceding claim;
introducing a cementitious material and water into said mixing chamber to form a cementitious slurry; and
introducing foam into said cementitious slurry via said foam inlet.

15. A method according to claim 14, wherein said foam is introduced to said cementitious slurry at a velocity between three and five times inclusive the velocity of the cementitious slurry.

Fig. 1

# Fig. 2

301 —— | PROVIDE APPARATUS |

302 —— | INTRODUCE SLURRY ADDITIVES |

303 —— | INTRODUCE FOAM |

300

## Fig. 3

**Distance Between the Foam Inlet and the
Second End of the Channel (mm)**

## Fig. 4

**Distance From the Mixing Chamber Outlet (mm)**

Fig. 5

Europäisches
Patentamt

European
Patent Office

Office européen
des brevets

# EUROPEAN SEARCH REPORT

Application Number

EP 22 30 6590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/117891 A1 (WITTBOLD JAMES R [US] ET AL) 26 June 2003 (2003-06-26) * paragraphs [0035], [0036], [0039], [0040] * * paragraphs [0045], [0057] * * figures 1, 6, 8, 9 * | 1,6-10, 13,14 | INV. B28C5/38 B28B19/00 B28C7/16 C04B38/10 |
| X | US 5 683 635 A (SUCECH STEVEN W [US] ET AL) 4 November 1997 (1997-11-04) * column 7, lines 60-67 * * column 8, lines 1-9, 40-45, 55-64 * * column 9, lines 6-15 * * column 11, lines 16-29 * * figures 1, 2 * | 1,6-9, 12-15 | |
| X | US 2016/121287 A1 (BROWN STANLEY C [US] ET AL) 5 May 2016 (2016-05-05) * paragraphs [0007], [0023], [0024], [0030] * * paragraphs [0032], [0034], [0035], [0038] * * paragraphs [0040], [0041] * * figures 1, 2, 9A, 9B * | 1-3, 6-11,13, 14 | |
| | | | TECHNICAL FIELDS SEARCHED (IPC) |
| A | US 2011/308432 A1 (WITTBOLD JAMES R [US] ET AL) 22 December 2011 (2011-12-22) * paragraphs [0022], [0028], [0050] * * figures 1, 5, 7 * | 1-15 | B28B B28C C04B B01F |
| A | US 2007/008815 A1 (NAKAMURA WATARU [JP] ET AL) 11 January 2007 (2007-01-11) * paragraphs [0034], [0076], [0080], [0118] * * figure 3 * | 1-15 | |

The present search report has been drawn up for all claims

| Place of search | Date of completion of the search | Examiner |
|---|---|---|
| The Hague | 24 March 2023 | Papakostas, Ioannis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6590

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2023

| Patent document cited in search report | | Publication date | Patent family member(s) | | Publication date |
|---|---|---|---|---|---|
| US 2003117891 | A1 | 26-06-2003 | CA | 2446672 A1 | 30-01-2003 |
| | | | EP | 1417081 A1 | 12-05-2004 |
| | | | MX | PA03011139 A | 26-02-2004 |
| | | | NZ | 529470 A | 28-10-2005 |
| | | | US | 6494609 B1 | 17-12-2002 |
| | | | US | 2003117891 A1 | 26-06-2003 |
| | | | WO | 03008167 A1 | 30-01-2003 |
| US 5683635 | A | 04-11-1997 | AT | 258491 T | 15-02-2004 |
| | | | AU | 715479 B2 | 03-02-2000 |
| | | | CA | 2213499 A1 | 03-07-1997 |
| | | | CN | 1175922 A | 11-03-1998 |
| | | | DE | 69631414 T2 | 02-12-2004 |
| | | | EP | 0810920 A1 | 10-12-1997 |
| | | | ID | 19660 A | 23-07-1998 |
| | | | JP | H11501002 A | 26-01-1999 |
| | | | KR | 19980702504 A | 15-07-1998 |
| | | | PL | 321861 A1 | 22-12-1997 |
| | | | US | 5683635 A | 04-11-1997 |
| | | | WO | 9723337 A1 | 03-07-1997 |
| US 2016121287 | A1 | 05-05-2016 | AU | 2015339825 A1 | 01-06-2017 |
| | | | CA | 2965483 A1 | 06-05-2016 |
| | | | JP | 2017534487 A | 24-11-2017 |
| | | | KR | 20170078684 A | 07-07-2017 |
| | | | US | 2016121287 A1 | 05-05-2016 |
| | | | WO | 2016069273 A1 | 06-05-2016 |
| US 2011308432 | A1 | 22-12-2011 | US | 2006244183 A1 | 02-11-2006 |
| | | | US | 2011308432 A1 | 22-12-2011 |
| US 2007008815 | A1 | 11-01-2007 | AT | 516125 T | 15-07-2011 |
| | | | CA | 2527482 A1 | 02-12-2004 |
| | | | CN | 1795081 A | 28-06-2006 |
| | | | EP | 1637302 A1 | 22-03-2006 |
| | | | ES | 2371502 T3 | 03-01-2012 |
| | | | JP | 4559360 B2 | 06-10-2010 |
| | | | JP | 5193405 B2 | 08-05-2013 |
| | | | JP | 2010195049 A | 09-09-2010 |
| | | | JP | WO2004103663 A1 | 20-07-2006 |
| | | | KR | 20060004990 A | 16-01-2006 |
| | | | PL | 1637302 T3 | 29-02-2012 |
| | | | RU | 2357859 C2 | 10-06-2009 |
| | | | TW | I323696 B | 21-04-2010 |
| | | | US | 2007008815 A1 | 11-01-2007 |
| | | | WO | 2004103663 A1 | 02-12-2004 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 22 30 6590

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2023

| Patent document cited in search report | Publication date | Patent family member(s) | Publication date |
|---|---|---|---|
| ---------------------------------------------------------------------------------- | | | |

EPO FORM P0459

For more details about this annex : see Official Journal of the European Patent Office, No. 12/82

page 2 of 2